# EUROPEAN PATENT SPECIFICATION

(11) **EP 1 814 279 B1**
(45) Date of publication and mention of the grant of the patent: **29.09.2010**
(21) Application number: 06101119.3
(22) Date of filing: 31.01.2006
(51) Int. Cl.: H04L 29/06, H04W 80/04

(54) **Method and apparatus for implementing bearer mobility**
Verfahren und Vorrichtung zum Durchführen von Trägermobilität
Méthode et appareil pour l'implémentation de la mobilité du porteur

(43) Date of publication of application: 01.08.2007
(73) Proprietor: NTT DoCoMo, Inc., Tokyo (JP)
(72) Inventor: Zugenmaier, Alf, 81241 München (DE); Laganier, Julien, 81543 München (DE)
(74) Representative: Betten & Resch

(56) References cited:
- HENDERSON (EDITOR) THE BOEING COMPANY T: "End-Host Mobility and Multihoming with the Host Identity Protocol; draft-ietf-hip-mm-02.txt" IETF STANDARD-WORKING-DRAFT, INTERNET ENGINEERING TASK FORCE, IETF, CH, vol. hip, no. 2, 17 July 2005 (2005-07-17), XP015041223 ISSN: 0000-0004
- MOSKOWITZ ICSALABS R ET AL: "Host Identity Protocol; draft-ietf-hip-base-04.txt" IETF STANDARD-WORKING-DRAFT, INTERNET ENGINEERING TASK FORCE, IETF, CH, vol. hip, no. 4, 24 October 2005 (2005-10-24), XP015042383 ISSN: 0000-0004
- TSCHOFENIG SIEMENS J OTT UNIVERSITAET BREMEN H SCHULZRINNE COLUMBIA U T HENDERSON THE BOEING COMPANY G CAMARILLO ERICSSON H: "Interaction between SIP and HIP; draft-tschofenig-hiprg-host-identiti es-02.txt" IETF STANDARD-WORKING-DRAFT, INTERNET ENGINEERING TASK FORCE, IETF, CH, no. 2, 18 July 2005 (2005-07-18), XP015040038 ISSN: 0000-0004

## Description

### FIELD OF THE INVENTION

The present invention relates to bearer mobility, in particular to an application where two bearer endpoints move simultaneously.

### BACKGROUND OF THE INVENTION

The term bearer mobility means a move of a data flow from one application endpoint to another, possibly residing on a different physical device. For instance, it means to watch the beginning of a movie on a PDA, and the end on a computer.

At first there are explained some terms which are used hereinafter.
■ **Endpoint:** Logical object, at which a communication service is terminated. Different endpoints exits at different layers (e.g. application, TCP, IP, etc.)
■ **Host/Terminal:** Physical device communicating over a network.
■ **Bearer:** Logical association between communicating applications (e.g. media streaming) endpoints.
■ **Flow:** Logical association between communicating network layers (e.g. TCP, HIP) endpoints.
■ **Session:** State shared by applications communicating with bearers.
■ **Endpoint Mobility across Terminals:** Mobility of an endpoint from one terminal to another, and consequently of the bearer or flow bound to the endpoint. This is a scenario in which a communication endpoint migrates from one terminal, e.g. a mobile phone, to another terminal, a computer for instance, without affecting the communication channel and protocol states, as perceived by the applications.

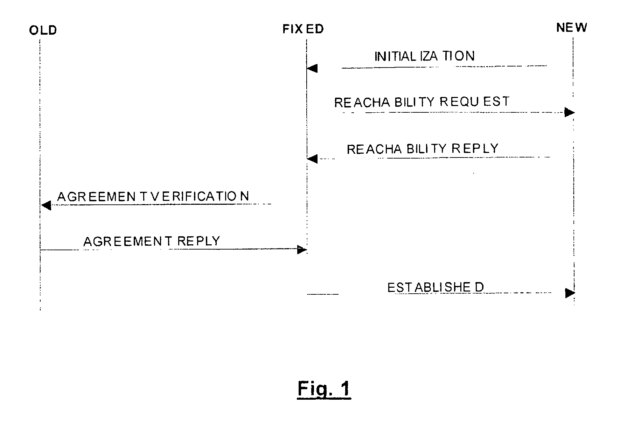

Fig 1 schematically illustrates how a bearer mobility operates in case of a bearer representing a connection between an "old" device and a "fixed" destination device moves to a "new" device.

After an initialisation message sent from the new device to the fixed one, the fixed device dispatches a reachability request to the new one, this is followed by a reachability reply from the new device. These reachability request and reply messages serve to perform an address check and verify the claimed address of the requesting device to avoid an attack.

Then the "fixed" device sends an agreement verification request to the old endpoint. This may trigger an update of state information defining the bearer endpoint, such as e.g. the Hosts Identity Tags used in the Host Identity Protocol HIP. Then the old endpoint returns an agreement reply to the fixed endpoint which in turn informs the new endpoint that the transfer now has been established and the bearer can be taken over by the new endpoint.

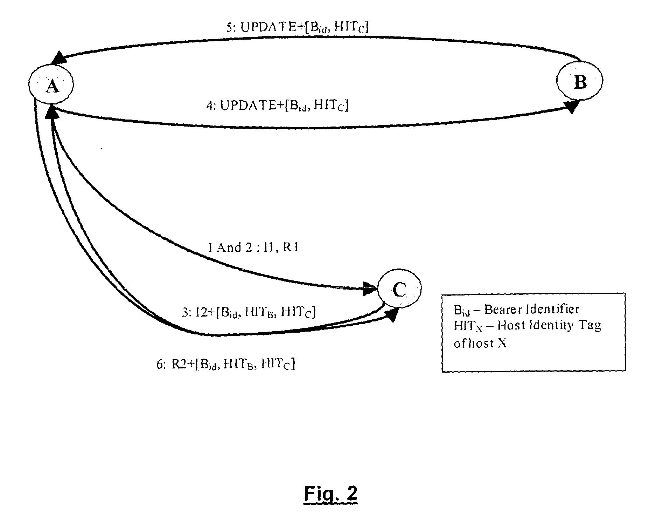

In the following a somewhat more detailed example of such a bearer mobility protocol is now explained in connection with Fig. 2. In this example an endpoint B should be moved to a new endpoint C while endpoint A remains fixed. This example uses the so-called host Identity Protocol HIP.

The mechanism relies on HIP-like exchanges, and assumes that a HIP association exists between the bearer endpoints' owners prior to the endpoint movement. HIP (Host Identity Protocol) is a protocol inserted between the transport layer and the network layer of the IP stack. This HIP protocol separates the endpoint of a connection from the IP address by introducing a new name space of host Identities (HI) which are typically hash values of the public keys of the individual devices. These are then mapped onto the IP addresses. With the socket interface to TCP/IP, a socket is typically bound to an IP address and a port number. When HIP is used, the socket is bound to a Host Identity (or a Host Identity Tag, the hash of the Host Identity) and a port number. When data packets are sent from one socket to another, the source and destination Host Identities are mapped into appropriate locator IP addresses which will be used to fill the corresponding fields of the IP packets, thus allowing routing of the packet in an IP network.

In the HIP protocol the owner of an endpoint is identified by cryptographic Identities (i.e. a public-private key pair.) The use of cryptographic identifiers allows to verify the authenticity of messages via digital signatures, hence countering impersonation attacks.

In the following the protocol will be explained in connection with Fig. 2. The first message I1 is the initialisation message and the second one the reachability Request R1. This is followed by the third message which corresponds to the reachability reply. It contains the bearer identifier and the host identifiers HIT of endpoints B and C. This is the message which actually triggers the update process. In response to message 3 there is sent an update request message (message 4) from the fixed endpoint to the old endpoint which should move. This message comprises the host identifier HIT of the new endpoint C to which the bearer should move.

In response to the update request the mapping of the host identifiers in the endpoint B is updated to reflect the new endpoint C, and then an update acknowledgement message is sent. In response to this acknowledgement message there is sent a final message R2 to finalise the transfer which includes the identifiers of the old and the new bearer endpoint. The transfer is then complete and the new endpoint C may continue the connection.

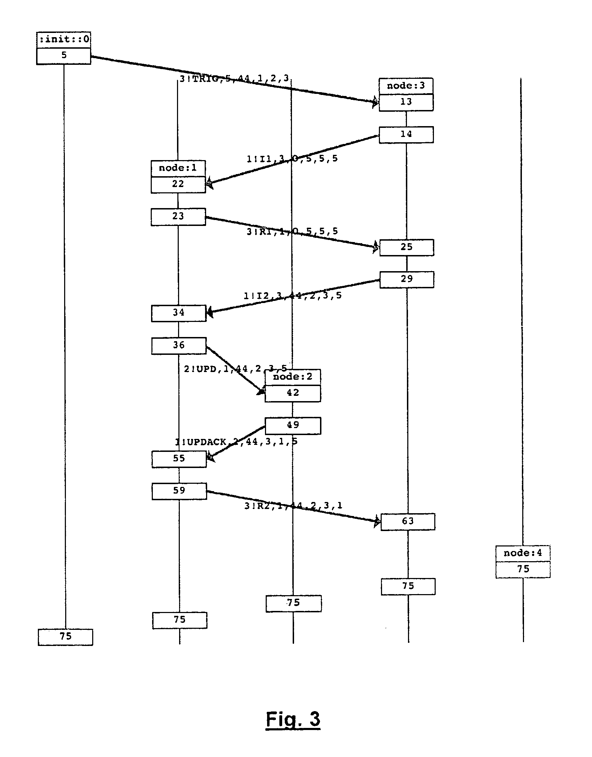

Fig. 3 shows a sequence diagram in which this protocol is explained in a somewhat more detailed manner. Node 3 here represents the new node C shown in Fig. 2, node 2 corresponds to node B of Fig. 2 and node 1 corresponds to node A of Fig. 2.

The whole process is started by an external triggering message. Thereafter node 3 sends the initialisation message I1 whereafter node 1 returns the reachability request R1. The reachability reply I2 then triggers the updating which is shown as UPD message from node 1 to 2 and as UPDACK message from node 2 to 1 in Fig. 3.

Thereafter the final completion message is sent from node 1 to node 3 to complete the transfer.

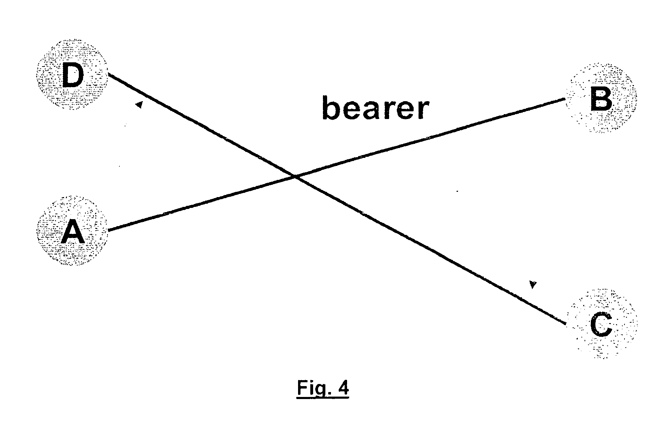

A problem with this protocol, however, arises in the case that two bearers want to move simultaneously. This is schematically illustrated in Fig. 4 In this Figure bearer endpoint B wants to move to bearer endpoint C and furthermore bearer endpoint A wants to move to D. In such a case there may arise consistency problems.

One solution would be to serialise the whole procedure. This approach is followed by the so-called session invitation protocol SIP. In case of SIP, if both endpoints receive a RE-INVITE message simultaneously, both of them send a request pending message. Then one of them delays its RE-INVITE by a random value between 0 and 2 seconds. It is clear that this approach involves an undesirable delay which should be avoided.

HENDERSON (EDITOR) THE BOEING COMPANY T: "End Host Mobility and Multihoming with the Host Identity Protocol; draft-ietf-hip-mm-02.txt", 17 July 2005, defines multihoming extensions to the Host Identity Protocol. The problem of how to enable two bearers to move simultaneously is not dealt with.

It is therefore an object of the present invention to provide a method which can be applied for implementing bearer mobility in case of a simultaneous move of both endpoints without the disadvantages of the prior art.

### SUMMARY OF THE INVENTION

The present invention is defined in the independent claims. The dependent claims define embodiments of the invention.

According to a first embodiment of the invention there is provided a method for transferring a bearer endpoint of a bearer, a bearer comprising a bearer endpoint and a corresponding bearer endpoint, each bearer endpoint comprising state information defining a logical association with a corresponding bearer endpoint, the method comprising:
a third bearer endpoint sending a first bearer transfer initiation request message to a second bearer endpoint, for transferring a first bearer endpoint, corresponding to the second bearer endpoint, to the third bearer endpoint;
the second bearer endpoint sending a state information update request message to the first bearer endpoint for requesting the first bearer endpoint to update state information defining a logical association of the first bearer endpoint; a fourth bearer endpoint sending a second bearer transfer initiation request message to the first bearer endpoint, for transferring the second bearer endpoint to a fourth bearer endpoint;
the first bearer endpoint sending an updating acknowledgement message to the second bearer endpoint, for acknowledging the state information update request message, the updating acknowledgement message comprising an indication of the fourth bearer endpoint;
the second bearer endpoint sending an update request completion message to the third bearer endpoint, the update request completion message comprising an indication of the fourth bearer endpoint;
the second bearer endpoint sending an acknowledgement message to the first bearer endpoint, the acknowledgement message indicating that the second bearer endpoint has sent the update request completion message to the third bearer endpoint;
the first bearer endpoint updating, in response to the acknowledgement message, the state information defining the logical association of the first bearer endpoint.

The detection of a second bearer endpoint transfer request together with the sending of the information regarding the destination of the second bearer endpoint transfer to the destination of the first bearer endpoint transfer and the delay of the actual updating of the state information until a further acknowledgement message has been received enables a solution to the so-called double-jump problem which avoids the disadvantages which come along with a serialization approach like in the prior art.

According to one embodiment said state information defining the first and second bearer endpoints comprises a mapping between a logical name for the endpoint and a locator, whereas said logical endpoint for the name is a host Identity tag and said locator is an IP address.

The usage of the mapping between a host Identity tag and an IP address enables the usage of the HIP protocols which provides several advantageous security features and thereby makes a impersonation attack or a denial of service-attack difficult.

According to one embodiment said update acknowledgement message sent by said first bearer endpoint comprises an indication of said fourth bearer endpoint. This makes it possible to use an existing message in an existing protocol for the transfer of the indication of the fourth bearer endpoint

According to one embodiment the method further comprises:
before transmitting said further update acknowledgement message from said second bearer endpoint to said first bearer endpoint, sending an update request completion message from said second bearer endpoint to said third bearer endpoint.

According to one embodiment said update request completion message comprises an indication of said fourth bearer endpoint.

The usage of the update completion message for the transfer of the indication of the fourth bearer endpoint makes it possible to use an existing message in an existing protocol for the transfer of the indication of the fourth bearer endpoint

According to one embodiment the method further comprises:
after sending said first bearer transfer initiation request from said third bearer endpoint to said second bearer endpoint, sending a reachability reply request message from said second bearer endpoint to said third bearer endpoint, and
sending a reachability reply message from said third bearer endpoint to said second bearer endpoint.

According to one embodiment the method further comprises:
detecting said second bearer endpoint transfer request by said first bearer endpoint by detecting a second bearer endpoint transfer request message or a reachability reply message sent from said fourth bearer endpoint to said first bearer endpoint.

According to one embodiment the method further comprises:
in response to said second bearer endpoint transfer request received by said first bearer endpoint, sending a state information update request message from said first bearer endpoint to said second bearer endpoint,
sending an update acknowledgement message from said second bearer endpoint to said first bearer endpoint, and
sending a message to said fourth bearer endpoint which comprises an indication of said third bearer endpoint;
executing an updating of said state information defining the logical association of said second bearer endpoint, whereas
said updating of said state information defining the logical association of said second bearer endpoint is delayed until a further update acknowledgement message is received by said second bearer endpoint from said first bearer endpoint, said further update acknowledgement message indicating that information indicating the third bearer endpoint has been communicated to said fourth bearer endpoint.

This makes the whole procedure symmetrical and further it enables an interleaved transmittal of the messages belonging to different bearer endpoint requests.

According to one embodiment said update acknowledgement message sent by said second bearer endpoint comprises an indication of said third bearer endpoint.

According to one embodiment said method further comprises:
before transmitting said further update acknowledgement message from said first bearer endpoint to said second bearer endpoint, sending an update request completion message from said first bearer endpoint to said fourth bearer endpoint.

According to one embodiment said update request completion message comprises an indication of said third bearer endpoint.

According to one embodiment the messages relating to the first bearer endpoint transfer by which said first bearer endpoint is transferred to said third bearer endpoint and the messages relating to the second bearer endpoint transfer by which said second bearer endpoint is transferred to said fourth bearer endpoint are sent in an interleaved manner.

According to one embodiment there is provided a system for transferring a bearer endpoint of a bearer, a bearer comprising a bearer
endpoint and a corresponding bearer endpoint, the system comprising:
first bearer endpoint means,
second bearer endpoint means,
third bearer endpoint means,
fourth bearer endpoint means,
wherein each bearer endpoint means is adapted to provide a bearer endpoint and to store state information defining a logical association of the provided bearer endpoint with a corresponding bearer endpoint, wherein
the third bearer endpoint means is adapted to send a first bearer transfer initiation request message to the second bearer endpoint means, for transferring a first bearer endpoint provided by the first bearer endpoint means to a third bearer endpoint provided by the third bearer endpoint means, the first bearer endpoint corresponding to a second bearer endpoint provided by the second bearer endpoint means;
the second bearer endpoint means is adapted to send, in response to the first bearer transfer initiation request message, a state information update request message to the first bearer endpoint means, for requesting the first bearer endpoint means to update state information defining a logical association of the first bearer endpoint;
the fourth bearer endpoint means is adapted to send a second bearer transfer initiation request message to the first bearer endpoint means, for transferring the second bearer endpoint to a fourth bearer endpoint provided by the fourth bearer endpoint means;
the first bearer endpoint is adapted to send an updating acknowledgement message to the second bearer endpoint means, for acknowledging the state information update request message, the updating acknowledgement message comprising an indication of the fourth bearer endpoint;
the second bearer endpoint means is adapted to send, in response to the updating acknowledgement message, an update request completion message to the third bearer endpoint means, the update request completion message comprising an indication of the fourth bearer endpoint;
the second bearer endpoint means is adapted to send an acknowledgement message to the first bearer endpoint means, the acknowledgement message indicating that the second bearer endpoint means has sent the update request completion message to the third bearer endpoint means;
the first bearer endpoint means is adapted to update, in response to the acknowledgement, the state information defining the logical association of the first bearer endpoint.

According to one embodiment the system further comprises:
means or modules for carrying out a method according to one of the embodiments of the invention.

According to one embodiment there is provided computer program which when executed on a computer performs the method according to one of the embodiments of the invention.

### BRIEF DESCRIPTION OF THE DRAWINGS

Fig. 1 schematically illustrates a bearer mobility where only a single bearer endpoint moves.
Fig. 2 schematically illustrates a more detailed version of a bearer mobility procedure where only a single bearer endpoint moves.
Fig. 3 schematically illustrates an even more detailed version of a bearer mobility procedure where only a single bearer endpoint moves.
Fig. 4 schematically illustrates a situation where two bearer endpoints are to move simultaneously.
Fig. 5 schematically illustrates a bearer mobility procedure according to an embodiment of the invention.
Fig. 6 schematically illustrates a bearer mobility procedure according to a further embodiment of the invention.

### DETAILED DESCRIPTION

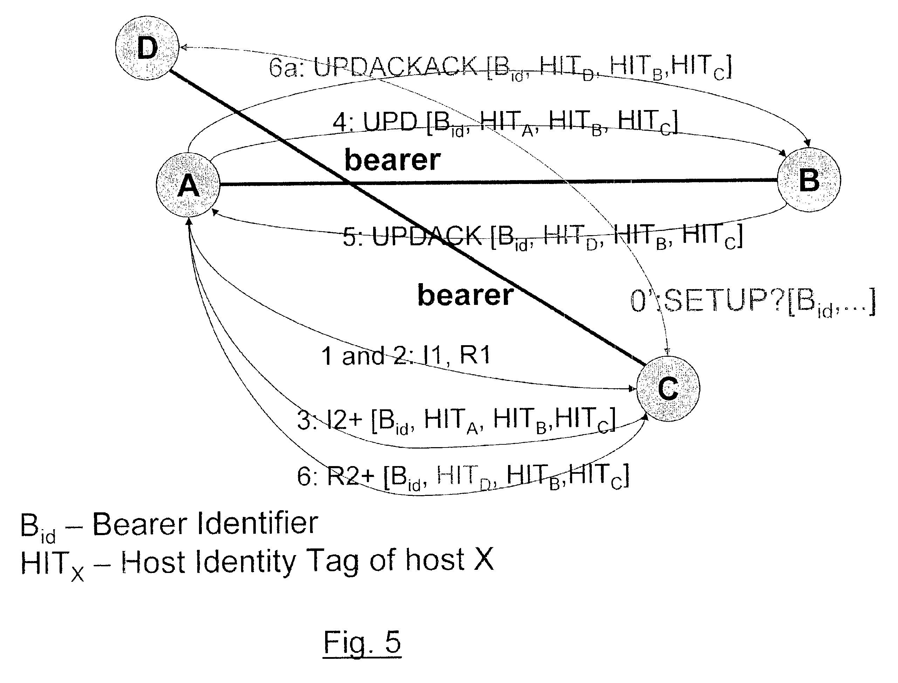

A first embodiment will now be explained in connection with Fig. 5. Fig. 5 indicates the case where a bearer having two (a first and a second) bearer endpoints A and B is to be moved. The movement is such that endpoint B (a first endpoint) moves to endpoint C (a third endpoint) and endpoint A (a second endpoint) moves to endpoint D (a fourth endpoint). The Fig. 5 resembles Fig. 2, except that it now illustrates the case where endpoints A and B are to move simultaneously. It also exemplifies a case where the there is made use of the HIP protocol for handling the mobility.

From endpoint C there is sent an initialisation message I1 to endpoint A which returns a reachability request R1 to verify the connection and its communication partner. Endpoint C replies with the reachability reply I2 which includes the host Identity tags of endpoints A, B, and C which are the endpoints directly involved in the move of the bearer from endpoint B to endpoint C.

Like in the case of Fig. 2 there is then sent an update request (message 4, UPD) in order to request the update of the state information in endpoint B to reflect the transfer to node C. This message, like the previous message I2, includes the host Identity tags HIT of endpoints A, B, and C and the bearer identifier.

In response to the update request message endpoint B returns an update acknowledging message UPDACK to acknowledge the receipt of the UPD message. In a prior art case like the one shown in Fig. 2 this would mean that the state information in endpoint B has been updated. However, in this embodiment there has been detected a further bearer endpoint transfer request requesting the transfer of endpoint A to endpoint D.

The detection of this message is not explicitly shown in Fig. 5 for not decreasing the intelligibility of Fig. 5. However, the skilled person will readily recognise and understand that the procedure described in the foregoing is to be applied in a symmetrical manner to a bearer endpoint transfer in which bearer endpoint A moves to bearer endpoint D. This means that the request of a move from endpoint A to endpoint D will mean that endpoint D sends an initialisation message I1 to endpoint B. Endpoint B in turn returns a reachability request R1 to endpoint D (as did endpoint A to endpoint C in connection with the first endpoint transfer) and then endpoint D sends the reachability reply I2 containing the identifiers of endpoints A, B and D to endpoint B. Therefore, endpoint B is aware that there has been a request to move from endpoint A to endpoint D in case such a request has actually been issued by endpoint D.

As mentioned, already now the skilled person recognises that Fig. 5 actually shows only the parts of the bearer mobility protocol which relate to the movement of endpoint B to endpoint C, and the corresponding messages relating to the movement of endpoint A to endpoint D are omitted for the sake of increasing the intelligibility of Fig. 5. However, the skilled person will recognise that both processes are symmetrical so that by replacing B through A, A through B, C through D and D through C in Fig. 5 one can see the corresponding sequence flow in case of the movement from A to D.

Therefore, as mentioned, endpoint B is aware of the fact that there has also been a transfer request regarding the transfer from endpoint A to endpoint D. This causes endpoint B not to readily update the state information in a manner that would actually already now implement the transfer from B to C. Instead the actual updating of the state information defining the logical association of endpoint B is not yet carried out, and the local state information in endpoint B is not (yet) deleted.

Nevertheless, the update acknowledgement message us sent from endpoint B to endpoint A. This may e.g. indicate that endpoint B has completed the preparations for executing the updating of the local state information defining the bearer endpoint, albeit the update has actually not yet been executed.

Together with the update acknowledgement message there is sent an indication of the endpoint relating to the second endpoint transfer, namely the transfer destination endpoint D. This indication may e.g. be given by the Host Identity Tag of this endpoint which is known by B because it has detected the request of the endpoint transfer from A to D, as mentioned before.

By indicating this further endpoint D which is actually not directly involved in the transfer from endpoint B to C, the endpoint B signals to endpoint A that there has been this further endpoint transfer request which endpoint B is now aware of.

Endpoint A according to the prior art mechanism (cp. Fig. 2) would now only have to send the final completion message to endpoint C to complete the transfer from B to C. However, since a further transfer (from A to D) is involved which has been requested (almost) simultaneously, at least before the first transfer has been fully completed; the completion message is augmented by an indication of the (fourth) endpoint D to which the transfer from endpoint A should move. This means that by the completion message R2 the endpoint A informs the endpoint C about its future new communication partner which is about to replace A.

As mentioned before, the actual update of the state information in endpoint B has been delayed due to the further endpoint move request. After having sent the message R2 to endpoint C the endpoint A then sends a "further" update acknowledgement message UPDACKACK to endpoint B which causes endpoint B to update its state information to thereby complete the transfer. This means that then the transfer from B to C has been completed, and the endpoint B in response to the UPDACKACK message now executes the actual updating of the state information defining the logical association of endpoint B. This means that the Host Identity Tag mapping which maps the HIT of endpoint B to its IP address may be updated such that it is now mapped to the IP address of endpoint C. This means that the transfer from endpoint B to endpoint C has been completed.

However, not only the transfer from B to C has been completed, this procedure has furthermore taken into account also the effects of a "simultaneous" transfer from A to D. This is because the actual update has been delayed until endpoint A has sent the further acknowledgement message UPDACKACK. Furthermore this UPDACKACK message has been sent only after also endpoint C has been informed that it is about to communicate with a new endpoint, namely endpoint D which should replace endpoint A. This means that after the preparations for the first transfer (the transfer from B to C) in endpoint B (to enable the transfer from B to C) and the preparations for the first transfer in endpoint C (to prepare for the communication between C and D) have been completed there is sent the "final" or "further" acknowledgement message UPDACKACK which then finalises the transfer of the bearer endpoint B to bearer endpoint C.

It will be readily apparent that the procedure as shown in Fig. 5 and as explained above is in the same but just symmetrical manner executed for the transfer from endpoint A to D. However, for the sake of intelligibility the corresponding messages are not shown in Fig. 5. Nevertheless the corresponding messages will be explained in the following.

Regarding the transfer from A to D there is at first sent the initialisation message I1 from node D to node B which returns to node D the reachability request R1. Endpoint D then responds by sending to B the reachability reply I2 including the host Identity tags of nodes A, B, and C and the bearer identifier. Reachability request and reply serve to perform an address check of the requesting endpoint to avoid an attack. Then an update request UPD is sent from endpoint B to endpoint A (just in the opposite direction as shown in Fig, 5) which includes the identifiers of endpoints A, B, and D, Endpoint A then responds with the acknowledgement message UPDACK which additionally includes an indication of the new endpoint D (e.g. its host Identity Tag HIT).

Then endpoint B sends the completion message R2 to endpoint D, whereas this message R2 now includes an indication of the endpoint C to which endpoint B is about to move. Endpoint A is aware of the movement to be performed by node B due to the messages I1, R1 and I2 which it has received from node C as explained already previously in connection with Fig. 5. Therefore it can include the identifier of C into the UPDACK message sent from A to B, whereas in turn B forwards this information to A together with the completion message R2.

After node D has received the completion message R2 it is informed that it is bout to communicate with endpoint C and can prepare accordingly. Then the "further" acknowledgement message UPDACKACK is sent from B to A which then may in turn actually update its local state information to actually execute the transfer from node A to node D.

After the UPDACKACK message has been sent, according to one embodiment there may be sent a further message O'SETUP? which asks endpoint D for a confirmation whether he indeed wants to communicate with C. This message is indicated as O'SETIP? in Fig. 5.

The foregoing description makes it clear that the method described enables a virtually simultaneous transfer of two bearer endpoints. This is because rather than following a serialisation approach like in the prior art there is followed an approach where the messages related to the two transfers can be sent independently in an interleaved manner. Consistency problems are avoided by introducing the "further" acknowledgement message until the reception of which an actual update of state information is delayed. Moreover, the inclusion of an indication of the new endpoint regarding the "second transfer request" into the update acknowledgement message UPDACK and the completion message R2 of the first endpoint transfer procedure makes it possible to mix information the two transfer processes in a manner which does not lead to consistency problems and which still enables to carry out the two transfer processes in a fully symmetric manner.

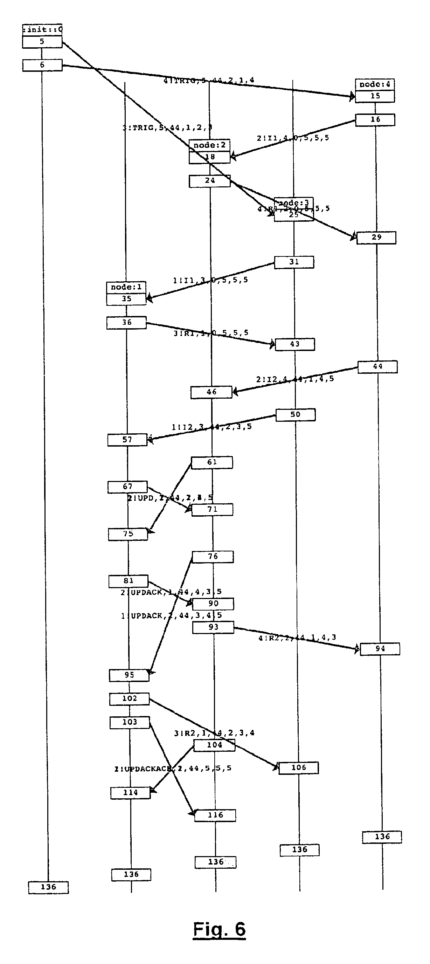

A further embodiment of the bearer endpoint transfer will now be explained in connection with Fig. 6. Fig. 6 resembles Fig. 3, it also shows a sequence diagram, however, now in case of a simultaneous transfer of two endpoints similar to the embodiment which has been explained in connection with Fig. 5.

In Fig. 6 node 1 corresponds to endpoint A of Fig. 5, node 2 corresponds to endpoint B of Fig. 5, node 3 corresponds to endpoint C of Fig. 5 and node 4 corresponds to endpoint D of Fig. 5. This means that the original connection is between nodes 1 and 2 (in Fig. 5: between A and B) and that the role of node one will be taken over by node 4 and the role of node 2 will be taken over by node 3..

At first node 4 is triggered - e.g. by some external influence, e.g. by a user input or any other input, to carry out a transfer such that it replaces node 1. To start the transfer, node 4 sends an initialisation message I1 to node 2 which then returns a reachability request R1 to node 4.

In the meantime node 3 has been externally triggered (e.g. by a user or any other external or even internal trigger) to start to initiate a transfer from node 2 to node 3. Consequently node 3 sends to node 1 an initialisation message 11 in reply to which node 1 sends a reachability request message R1. Node 3 then sends a reachability reply message I2, whereas from Fig. 6 it can be seen that between these two messages R1 and I2 which are exchanged between nodes 1 and 3 there is interleaved the reachability reply sent from node 4 to node 2. The messages I1, R1 and I2 respectively contain the information as was explained in connection with Fig. 5, e.g. they contain the hosts identifier information and bearer identifier as was explained in connection with Fig. 5.

After node 2 received the message I2 from node 4 it sends an update request message UPD to node 1 to inform it that it should transfer to node 4. Similarly, node 1, after having received the message 12 from node 3, sends an update request message UPD to node 2 to inform node 2 that it should transfer to node 3. Again these messages respectively contain the information as was explained in connection with Fig. 5 concerning bearer identifier and host identifier.

In response to the update request messages UPD the nodes 1 and 2 respectively send update acknowledgement messages UPDACK. One can see in Fig. 6 how these messages are interleaved.

It should be noted that like in case of Fig. 5 the actual update of the state information is delayed in nodes 1 and 2 because each of these nodes is aware that there is still another transfer request as can be derived from the 11, R1 and R2 messages which have been received at nodes 1 and 2 already. Due to these messages each of the nodes 1 and 2 when receiving an UPD request message is aware of the fact that the just received UPD request message is only part of a first one of in total two transfers to be carried out. This causes these two nodes to delay the actual update of their local state information despite they send an update acknowledgement information UPDACK in response to the UPD request message.

Node 1, after receipt of the UPD message from node 2, sends as a reply an update acknowledgement message to node 2. This message includes an indication of the destination endpoint of the second transfer (the transfer from node 2 to node 3) different from first the transfer (the transfer from node 1 to node 4) to which the just received UPD request message was related. Therefore, in the UPD message sent from node 1 to node 2 there is included an indication of node 3. Then a completion message R 2 is sent from node 2 to node 4 which includes the indication of node 3 which was just received by node 2 with the UPDACK message. This enables node 4 which is about to take over the role from node 1 to prepare that its communication partner will soon be node 3 instead of node 2.

Similarly, the UPDACK message sent from node 2 to node 1 there is included an indication of the destination of the "first transfer" (from node 1 to node 4) which means that an indication of node 4 is included in this message. Node 1 then sends a completion message R2 to node 3 which includes an indication of node 4. This enables node 3 to prepare for the fact that it is soon to communicate with node 4 which takes over the role of node 1.

After the completion messages R2 have been sent from node 1 to node 3 and from node 2 to node 4, the preparation for the actual transfer has been completed. In order to inform node 2 about the completion, node 1 sends a "further" acknowledgement message UPDACKACK which informs node to that a further delay of the actual update of the local state information is not necessary. Similarly, Node 2 sends an UPDACKACK message to node 1 informing it that the further delay of the update of the local state information at node 1 is not necessary. Therefore, after receipt of the further acknowledgement message UPDACKACK the nodes 1 and 2 respectively update their local state information and the previous state information may be deleted. Thereby the transfer actually becomes completed.

It can be readily seen from Fig. 6 that the messages related to the two transfers, the first one from node 1 to 4, and the second 1 from node 2 to 3, can be sent in an interleaved manner. This means that any delay which would be caused by a forced serialisation can be avoided.

As far as state information is referred to in the foregoing embodiments, this state information may be implemented by the mapping of host Identity tags according to the HIP protocol to the IP addresses of the terminals. However, the skilled person will readily recognise that any other state information identifying the association of an endpoint with its communication partner may be used. Instead of Host Identity Tags there may be used other state information defining a session or a flow by logical association of their endpoints. It will therefore be understood by the skilled person that the procedure to implement a "bearer mobility" as used hereinbefore or in the appended claims may in the same manner be applied to implement a "flow mobility" or a "session mobility" and to implement a solution to the double jump problem in such cases where two endpoints are to move simultaneously or at least not fully sequentially.

It will be understood by the skilled person that the embodiments described hereinbefore may be implemented by hardware, by software, or by a combination of software and hardware. The modules described in connections with embodiments of the invention may be as a whole or in part implemented by microprocessors or computers which are suitably programmed such as to act in accordance with the methods explained in connection with embodiments of the invention.

## Claims

1. A method for transferring a bearer endpoint of a bearer, a bearer comprising a bearer endpoint and a corresponding bearer endpoint, each bearer endpoint comprising state information defining a logical association with a corresponding bearer endpoint, the method comprising:
a third bearer endpoint sending a first bearer transfer initiation request message to a second bearer endpoint, for transferring a first bearer endpoint, corresponding to the second bearer endpoint, to the third bearer endpoint;
**characterized in that** the method also comprises the following steps:
the second bearer endpoint sending a state information update request message to the first bearer endpoint for requesting the first bearer endpoint to update state information defining a logical association of the first bearer endpoint;
a fourth bearer endpoint sending a second bearer transfer initiation request message to the first bearer endpoint, for transferring the second bearer endpoint to a fourth bearer endpoint;
the first bearer endpoint sending an updating acknowledgement message to the second bearer endpoint, for acknowledging the state information update request message, the updating acknowledgement message comprising an indication of the fourth bearer endpoint;
the second bearer endpoint sending an update request completion message to the third bearer endpoint, the update request completion message comprising an indication of the fourth bearer endpoint;
the second bearer endpoint sending an acknowledgement message to the first bearer endpoint, the acknowledgement message indicating that the second bearer endpoint has sent the update request completion message to the third bearer endpoint;
the first bearer endpoint updating, in response to the acknowledgement message,
the state information defining the logical association of the first bearer endpoint.

2. The method of claim 1, wherein said state information defining the first and second bearer endpoints comprises a mapping between a logical name for the endpoint and a locator, and
wherein said logical endpoint for the name is a host Identity tag used in the Host Identity Protocol, HIP, and said locator is an IP address.

3. The method of one of the preceding claims, wherein said update acknowledgement message sent by said first bearer endpoint comprises an indication of said fourth bearer endpoint.

4. The method of one of the preceding claims, further comprising:
before transmitting said further update acknowledgement message from said second bearer endpoint to said first bearer endpoint, sending an update request completion message from said second bearer endpoint to said third bearer endpoint.

5. The method of claim 4, wherein said update request completion message comprises an indication of said fourth bearer endpoint.

6. The method of one of the preceding claims, further comprising:
after sending said first bearer endpoint transfer initiation request from said third bearer endpoint to said second bearer endpoint, sending a reachability reply request message from said second bearer endpoint to said third bearer endpoint, and
sending a reachability reply message from said third bearer endpoint to said second bearer endpoint.

7. The method of one of the preceding claims, further comprising:
detecting said second bearer endpoint transfer request by said first bearer endpoint by receiving a second bearer endpoint transfer request message or a reachability reply message sent from said fourth bearer endpoint to said first bearer endpoint.

8. The method of one of the preceding claims, further comprising:
in response to said second bearer endpoint transfer request received by said first bearer endpoint, sending a state information update request message from said first bearer endpoint to said second bearer endpoint,
sending an update acknowledgement message from said second bearer endpoint to said first bearer endpoint, and
sending a message to said fourth bearer endpoint which comprises an indication of said third bearer endpoint;
executing an updating of said state information defining the logical association of said second bearer endpoint, whereas
said updating of said state information defining the logical association of said second bearer endpoint is delayed until a further update acknowledgement message is received by said second bearer endpoint from said first bearer endpoint, said further update acknowledgement message indicating that information indicating the third bearer endpoint has been communicated to said fourth bearer endpoint.

9. The method of claim 8, wherein said update acknowledgement message sent by said second bearer endpoint comprises an indication of said third bearer endpoint.

10. The method of one of claims 8 or 9, further comprising:
before transmitting said further update acknowledgement message from said first bearer endpoint to said second bearer endpoint, sending an update request completion message from said first bearer endpoint to said fourth bearer endpoint.

11. The method of one of claims 8 to 10, wherein said update request completion message comprises an indication of said third bearer endpoint.

12. The method of one of the preceding claims, wherein the messages relating to the first bearer endpoint transfer by which said first bearer endpoint is transferred to said third bearer endpoint and the messages relating to the second bearer endpoint transfer by which said second bearer endpoint is transferred to said fourth bearer endpoint are sent in an interleaved manner.

13. System for transferring a bearer endpoint of a bearer, a bearer comprising a bearer endpoint and a corresponding bearer endpoint, the system comprising:
first bearer endpoint means,
second bearer endpoint means,
third bearer endpoint means,
fourth bearer endpoint means,
wherein each bearer endpoint means is adapted to provide a bearer endpoint and to store state information defining a logical association of the provided bearer endpoint with a corresponding bearer endpoint, wherein
the third bearer endpoint means is adapted to send a first bearer transfer initiation request message to the second bearer endpoint means, for transferring a first bearer endpoint provided by the first bearer endpoint means to a third bearer endpoint provided by the third bearer endpoint means, the first bearer endpoint corresponding to a second bearer endpoint provided by the second bearer endpoint means;
the second bearer endpoint means is adapted to send, in response to the first bearer transfer initiation request message, a state information update request message to the first bearer endpoint means, for requesting the first bearer endpoint means to update state information defining a logical association of the first bearer endpoint;
the fourth bearer endpoint means is adapted to send a second bearer transfer initiation request message to the first bearer endpoint means, for transferring the second bearer endpoint to a fourth bearer endpoint provided by the fourth bearer endpoint means;
the first bearer endpoint is adapted to send an updating acknowledgement message to the second bearer endpoint means, for acknowledging the state information update request message, the updating acknowledgement message comprising an indication of the fourth bearer endpoint;
the second bearer endpoint means is adapted to send, in response to the updating acknowledgement message, an update request completion message to the third bearer endpoint means, the update request completion message comprising an indication of the fourth bearer endpoint;
the second bearer endpoint means is adapted to send an acknowledgement message to the first bearer endpoint means, the acknowledgement message indicating that the second bearer endpoint means has sent the update request completion message to the third bearer endpoint means;
the first bearer endpoint means is adapted to update, in response to the acknowledgement message, the state information defining the logical association of the first bearer endpoint.

14. The system of claim 13, further adapted to carry out a method according to one of claims 2-12.

15. First bearer endpoint means adapted to provide a first bearer endpoint and to store state information defining a logical association of the first bearer endpoint with a corresponding second bearer endpoint provided by a second bearer endpoint means, wherein the first bearer endpoint means is adapted to:
receive a state information update request message from the second bearer endpoint for requesting the first bearer endpoint means to update the state information,
wherein the first bearer endpoint means is **characterised by** being adapted to:
receive a second bearer transfer initiation request message from a fourth bearer endpoint provided by a fourth bearer endpoint means, for transferring the second bearer endpoint to the fourth bearer endpoint,
send an updating acknowledgement message to the second bearer endpoint, for acknowledging the state information update request message, the updating acknowledgement message comprising an indication of the fourth bearer endpoint,
receive an acknowledgement message from the second bearer endpoint, the acknowledgement message indicating that the second bearer endpoint has sent an update request completion message to a third bearer endpoint provided by a third bearer endpoint means,
update, in response to the acknowledgement message, the state information.

16. Second bearer endpoint means adapted to provide a second bearer endpoint and to store state information defining a logical association of the second bearer endpoint with a corresponding first bearer endpoint provided by a first bearer endpoint means, wherein the second bearer endpoint means is adapted to:
receive a first bearer transfer initiation request message from a third bearer endpoint provided by a third bearer endpoint means, for transferring the first bearer endpoint to the third bearer endpoint,
send a state information update request message to the first bearer endpoint for requesting the first bearer endpoint to update state information defining a logical association of the first bearer endpoint,
wherein the second bearer endpoint means is **characterised by** being adapted to:
receive an updating acknowledgement message from the first bearer endpoint, for acknowledging the state information update request message, the updating acknowledgement message comprising an indication of a fourth bearer endpoint provided by a fourth bearer endpoint means,
send an update request completion message to the third bearer endpoint, the update request completion message comprising an indication of the fourth bearer endpoint,
send an acknowledgement message to the first bearer endpoint, the acknowledgement message indicating that the second bearer endpoint has sent the update request completion message to the third bearer endpoint.

17. Computer program comprising instructions for performing the method of claim 1.

## Patentansprüche

1. Verfahren zum Übertragen eines Bearer-Endpunkts eines Bearers, wobei ein Bearer einen Bearer-Endpunkt und einen entsprechenden Bearer-Endpunkt umfaßt, wobei jeder Bearer-Endpunkt Zustandsinformationen umfaßt, die eine logische Verbindung mit einem entsprechenden Bearer-Endpunkt definieren, wobei das Verfahren umfaßt:
einen dritten Bearer-Endpunkt, der eine erste Bearer-Übertragungsinitiierungsanforderungsnachricht an einen zweiten Bearer-Endpunkt sendet, um einen ersten Bearer-Endpunkt, der dem zweiten Bearer-Endpunkt entspricht, an den dritten Bearer-Endpunkt zu übertragen;
**dadurch gekennzeichnet, dass** das Verfahren ferner die folgenden Schritte umfaßt:
Senden einer Zustandsinformationen-Aktualisierungsanforderungsnachricht durch den zweiten Bearer-Endpunkt an den ersten Bearer-Endpunkt, um den ersten Bearer-Endpunkt aufzufordern, die Zustandsinformationen zu aktualisieren, die eine logische Verbindung des ersten Bearer-Endpunkts definieren;
Senden einer zweiten Bearer-Übertragungsinitiierungsanforderungsnachricht durch einen vierten Bearer-Endpunkt an den ersten Bearer-Endpunkt, um den zweiten Bearer-Endpunkt an einen vierten Bearer-Endpunkt zu übertragen;
Senden einer Aktualisierungsbestätigungsnachricht durch den ersten Bearer-Endpunkt an den zweiten Bearer-Endpunkt, um die Zustandsinformationen-Aktualisierungsanforderungsnachricht zu bestätigen, wobei die Aktualisierungsbestätigungsnachricht einen Hinweis auf den vierten Bearer-Endpunkt umfaßt;
Senden einer Aktualisierungsanforderungsabschlußnachricht durch den zweiten Bearer-Endpunkt an den dritten Bearer-Endpunkt, wobei die Aktualisierungsanforderungs-Abschlußnachricht einen Hinweis auf den vierten Bearer-Endpunkt umfaßt;
Senden einer Bestätigungsnachricht durch den zweiten Bearer-Endpunkt an den ersten Bearer-Endpunkt, wobei die Bestätigungsnachricht anzeigt, dass der zweite Bearer-Endpunkt die Aktualisierungsanforderungs-abschlußnachricht an den dritten Bearer-Endpunkt gesendet hat;
Aktualisieren der Zustandsinformationen, die die logische Verbindung des ersten Bearer-Endpunkt definieren, durch den ersten Bearer-Endpunkt in Reaktion auf die Bestätigungsnachricht.

2. Verfahren nach Anspruch 1, wobei die Zustandsinformationen, die die ersten und zweiten Bearer-Endpunkte definieren, ein Mapping zwischen einem logischen Namen für den Endpunkt sowie einen Locator umfassen, und
wobei der logische Endpunkt für den Namen ein Hostidentitätstag ist, das im Hostidentitätsprotokoll, HIP, verwendet wird, und der Locator eine IP-Adresse ist.

3. Verfahren nach einem der vorhergehenden Anspruche, wobei die Aktualisierungsbestätigungsnachricht, die vom ersten Bearer-Endpunkt gesendet wurde, einen Hinweis auf den vierten Bearer-Endpunkt umfaßt.

4. Verfahren nach einem der vorhergehenden Ansprüche, ferner umfassend:
Senden einer Aktualisierungsanforderungsabschlußnachricht vom zweiten Bearer-Endpunkt an den dritten Bearer-Endpunkt, bevor die weitere Aktualisierungsbestätigungsnachricht vom zweiten Bearer-Endpunkt an den ersten Bearer-Endpunkt übertragen wird.

5. Verfahren nach Anspruch 4, wobei die Aktualisierungsanforderungsabschlußnachricht einen Hinweis auf den vierten Bearer-Endpunkt umfaßt.

6. Verfahren nach einem der vorhergehenden Ansprüche, ferner umfassend:
Senden einer Erreichbarkeitsantwortanforderungsnachricht vom zweiten Bearer-Endpunkt an den dritten Bearer-Endpunkt, nachdem die erste Bearer-Endpunkt-Übertragungsinitiierungsanforderung vom dritten Bearer-Endpunkt an den zweiten Bearer-Endpunkt gesendet wurde, und
Senden einer Erreichbarkeitsantwortnachricht vom dritten Bearer-Endpunkt an den zweiten Bearer-Endpunkt.

7. Verfahren nach einem der vorhergehenden Ansprüche, ferner umfassend:
Detektieren der zweiten Bearer-Endpunkt-Übertragungsanforderung durch den ersten Bearer-Endpunkt, indem eine zweite Bearer-Endpunkt-Übertragungsanforderungsnachricht oder eine Erreichbarkeitsantwortnachricht, die vom vierten Bearer-Endpunkt gesendet wurde, vom ersten Bearer-Endpunkt empfangen wird.

8. Verfahren nach einem der vorhergehenden Ansprüche, ferner umfassend:
Senden einer Zustandsinformationen-Aktualisierungsanforderungsnachricht vom ersten Bearer-Endpunkt an den zweiten Bearer-Endpunkt in Reaktion darauf, dass die zweite Bearer-Endpunkt-Übertragungsanforderung vom ersten Bearer-Endpunkt empfangen wurde,
Senden einer Aktualisierungsbestätigungsnachricht vom zweiten Bearer-Endpunkt an den ersten Bearer-Endpunkt, und
Senden einer Nachricht an den vierten Bearer-Endpunkt, die einen Hinweis auf den dritten Bearer-Endpunkt umfaßt;
Durchführen einer Aktualisierung der Zustandsinformationen, die die logische Verbindung des zweiten Bearer-Endpunkts definieren, wobei
das Aktualisieren der Zustandsinformationen, die die logische Verbindung des zweiten Bearer-Endpunkt definieren, verzögert wird, bis eine weitere Aktualisierungsbestätigungsnachricht vom ersten Bearer-Endpunkt durch den zweiten Bearer-Endpunkt empfangen wird, wobei die weitere Aktualisierungsbestätigungsnachricht anzeigt, dass dem vierten Bearer-Endpunkt Informationen übermittelt wurden, die auf den dritten Bearer-Endpunkt hinweisen.

9. Verfahren nach Anspruch 8, wobei die vom zweiten Bearer-Endpunkt gesendete Aktualisierungsbestätigungsnachricht einen Hinweis auf den dritten Bearer-Endpunkt umfaßt.

10. Verfahren nach einem der Ansprüche 8 oder 9, ferner umfassend:
Senden einer Aktualisierungsanforderungsabschlußnachricht vom ersten Bearer-Endpunkt an den vierten Bearer-Endpunkt, bevor die weitere Aktualisierungsbestätigungsnachricht vom ersten Bearer-Endpunkt an den zweiten Bearer-Endpunkt übertragen wird.

11. Verfahren nach einem der Ansprüche 8 bis 10, wobei die Aktualisierungsanforderungsabschlußnachricht einen Hinweis auf den dritten Bearer-Endpunkt umfaßt.

12. Verfahren nach einem der vorhergehenden Ansprüche, wobei die Nachrichten, die in Bezug zur Übertragung des ersten Bearer-Endpunkts stehen, durch die der erste Bearer-Endpunkt an den dritten Bearer-Endpunkt übertragen wird, sowie die Nachrichten, die in Bezug zur Übertragung des zweiten Bearer-Endpunkts stehen, durch die der zweite Bearer-Endpunkt an den vierten Bearer-Endpunkt übertragen wird, in überlappender Art und Weise gesendet werden.

13. System zum Übertragen eines Bearer-Endpunkts eines Bearers, wobei ein Bearer einen Bearer-Endpunkt und einen entsprechenden Bearer-Endpunkt umfaßt, wobei das System umfaßt:
eine erste Bearer-Endpunkt-Einrichtung,
eine zweite Bearer-Endpunkt-Einrichtung,
eine dritte Bearer-Endpunkt-Einrichtung,
eine vierte Bearer-Endpunkt-Einrichtung,
wobei jede Bearer-Endpunkt-Einrichtung dazu ausgelegt ist, einen Bearer-Endpunkt zur Verfügung zu stellen und Zustandsinformationen zu speichern, die eine logische Verbindung des zur Verfügung gestellten Bearer-Endpunkts mit einem entsprechenden Bearer-Endpunkt definieren, wobei
die dritte Bearer-Endpunkt-Einrichtung dazu ausgelegt ist, eine erste Bearer-Übertragungsinitiierungsanforderungsnachricht an die zweite Bearer-Endpunkt-Einrichtung zu senden, um einen ersten Bearer-Endpunkt, der von der ersten Bearer-Endpunkt-Einrichtung zur Verfügung gestellt wird, an einen dritten Bearer-Endpunkt zu übertragen,
der von der dritten Bearer-Endpunkt-Einrichtung zur Verfügung gestellt wird, wobei der erste Bearer-Endpunkt einem zweiten Bearer-Endpunkt entspricht, der von der zweiten Bearer-Endpunkt-Einrichtung zur Verfügung gestellt wird;
die zweite Bearer-Endpunkt-Einrichtung dazu ausgelegt ist, in Reaktion auf die erste Bearer-Übertragungsinitiierungsanforderungsnachricht eine Zustandsinformationen-Aktualisierungsanforderungsnachricht an die erste Bearer-Endpunkt-Einrichtung zu senden, um die erste Bearer-Endpunkt-Einrichtung aufzufordern, Zustandsinformationen zu aktualisieren, die eine logische Verbindung des ersten Bearer-Endpunkt definieren;
die vierte Bearer-Endpunkt-Einrichtung dazu ausgelegt ist, eine zweite Bearer-Übertragungsinitiierungsanforderungsnachricht an die erste Bearer-Endpunkt-Einrichtung zu senden, um den zweiten Bearer-Endpunkt an einen vierten Bearer-Endpunkt zu übertragen, der von der vierten Bearer-Endpunkt-Einrichtung zur Verfügung gestellt wird;
der erste Bearer-Endpunkt dazu ausgelegt ist, eine Aktualisierungsbestätigungsnachricht an die zweite Bearer-Endpunkt-Einrichtung zu senden, um die zustandsinformationen-Aktualisierungsanforderungsnachricht zu bestätigen, wobei die Aktualisierungsbestätigungsnachricht einen Hinweis auf den vierten Bearer-Endpunkt umfaßt;
die zweite Bearer-Endpunkt-Einrichtung dazu ausgelegt ist, in Reaktion auf die Aktualisierungsbestätigungsnachricht eine Aktualisierungsanfordurngsabschlußnachricht an die dritte Bearer-Endpunkt-Einrichtung zu senden, wobei die Aktualisierungsanforderungsabschlußnachricht einen Hinweis auf den vierten Bearer-Endpunkt umfaßt;
die zweite Bearer-Endpunkt-Einrichtung dazu ausgelegt ist, eine Bestätigungsnachricht an die erste Bearer-Endpunkt-Einrichtung zu senden, wobei die Bestätigungsnachricht anzeigt, dass die zweite Bearer-Endpunkt-Einrichtung die Aktualisierungsanforderungsabschlußnachricht an die dritte Bearer-Endpunkt-Einrichtung gesendet hat;
die erste Bearer-Endpunkt-Einrichtung dazu ausgelegt ist, die Zustandsinformationen, die die logische Verbindung des ersten Bearer-Endpunkts definieren, in Reaktion auf die Bestätigungsnachricht zu aktualisieren.

14. System nach Anspruch 13, ferner dazu ausgelegt, ein Verfahren nach einem der Ansprüche 2 bis 12 auszuführen.

15. Erste Bearer-Endpunkt-Einrichtung, die dazu ausgelegt ist, einen ersten Bearer-Endpunkt zur Verfügung zu stellen und Zustandsinformationen zu speichern, die eine logische Verbindung des ersten Bearer-Endpunkts mit einem entsprechenden zweiten Bearer-Endpunkt definieren, der von einer zweiten Bearer-Endpunkt-Einrichtung zur Verfügung gestellt wird, wobei die erste Bearer-Endpunkt-Einrichtung dazu ausgelegt ist:
eine Zustandsinformationen-Aktualisierungsanforderungsnachricht vom zweiten Bearer-Endpunkt zu empfangen, um die erste Bearer-Endpunkt-Einrichtung aufzufordern, die Zustandsinformationen zu aktualisieren;
wobei die erste Bearer-Endpunkt-Einrichtung **dadurch gekennzeichnet ist, dass** sie dazu ausgelegt ist:
eine zweite Bearer-Übertragungsinitiierungsanforderungsnachricht von einem vierten Bearer-Endpunkt zu empfangen, der von einer vierten Bearer-Endpunkt-Einrichtung zur Verfügung gestellt wird, um den zweiten Bearer-Endpunkt an den vierten Bearer-Endpunkt zu übertragen,
eine Aktualisierungsbestätigungsnachricht an den zweiten Bearer-Endpunkt zu senden, um die Zustandsinformationen-Aktualisierungsanforderungsnachricht zu bestätigen, wobei die Aktualisierungsbestätigungsnachricht einen Hinweis auf den vierten Bearer-Endpunkt umfaßt,
eine Bestätigungsnachricht vom zweiten Bearer-Endpunkt zu empfangen, wobei die Bestätigungsnachricht anzeigt, dass der zweite Bearer-Endpunkt eine Aktualisierungsanforderungsabschlußnachricht an einen dritten Bearer-Endpunkt gesendet hat, der von einer dritten Bearer-Endpunkt-Einrichtung zur Verfügung gestellt wird,
die Zustandsinformationen in Reaktion auf die Bestätigungsnachricht zu aktualisieren.

16. Zweite Bearer-Endpunkt-Einrichtung, die dazu ausgelegt ist, einen zweiten Bearer-Endpunkt zur Verfügung zu stellen und Zustandsinformationen zu speichern, die eine logische Verbindung des zweiten Bearer-Endpunkts mit einem entsprechenden ersten Bearer-Endpunkt definieren, der von einer ersten Bearer-Endpunkt-Einrichtung zur Verfügung gestellt wird, wobei die zweite Bearer-Endpunkt-Einrichtung dazu ausgelegt ist:
eine erste Bearer-Übertragungsinitiierungsanforderungsnachricht von einem dritten Bearer-Endpunkt zu empfangen, der von einer dritten Bearer-Endpunkt-Einrichtung zur Verfügung gestellt wird, um den ersten Bearer-Endpunkt an den dritten Bearer-Endpunkt zu übertragen,
eine Zustandsinformationen-Aktualisierungsanforderungsnachricht an den ersten Bearer-Endpunkt zu senden, um den ersten Bearer-Endpunkt aufzufordern, die Zustandsinformationen zu aktualisieren, die eine logische Verbindung des ersten Bearer-Endpunkts definieren,
wobei die zweite Bearer-Endpunkt-Einrichtung **dadurch gekennzeichnet ist, dass** sie dazu ausgelegt ist:
eine Aktualisierungsbestätigungsnachricht vom ersten Bearer-Endpunkt zu empfangen, um die Zustandsinformationen-Aktualisierungsanforderungsnachricht zu bestätigen, wobei die Aktualisierungsbestätigungsnachricht einen Hinweis auf einen vierten Bearer-Endpunkt umfaßt, der von einer vierten Bearer-Endpunkt-Einrichtung zur Verfügung gestellt wird,
eine Aktualisierungsanforderungsabschlußnachricht an den dritten Bearer-Endpunkt zu senden, wobei die Aktualisierungsanforderungsabschlußnachricht einen Hinweis auf den vierten Bearer-Endpunkt umfaßt,
eine Bestätigungsnachricht an den ersten Bearer-Endpunkt zu senden, wobei die Bestätigungsnachricht anzeigt, dass der zweite Bearer-Endpunkt die Aktualisierungsanforderungsabschlußnachricht an den dritten Bearer-Endpunkt gesendet hat.

17. Computerprogramm, das Instruktionen zur Ausführung des Verfahrens nach Anspruch 1 umfaßt.

## Revendications

1. Procédé pour transférer un point d'extrémité de porteur d'un porteur, un porteur comprenant un point d'extrémité de porteur et un point d'extrémité de porteur correspondant, chaque point d'extrémité de porteur comprenant des informations d'état définissant une association logique avec un point d'extrémité de porteur correspondant, le procédé comprenant :
un troisième point d'extrémité de porteur envoyant un message de demande de lancement de transfert de premier point d'extrémité de porteur à un deuxième point d'extrémité de porteur, pour transférer un premier point d'extrémité de porteur correspondant au deuxième point d'extrémité de porteur, au troisième point d'extrémité de porteur ;
**caractérisé en ce que** le procédé comprend également les étapes suivantes :
le deuxième point d'extrémité de porteur envoyant un message de demande de mise à jour d'informations d'état au premier point d'extrémité de porteur pour demander au premier point d'extrémité de porteur de mettre à jour les informations d'état définissant une association logique du premier point d'extrémité de porteur ;
un quatrième point d'extrémité de porteur envoyant un message de demande de lancement de transfert de deuxième point d'extrémité de porteur au premier point d'extrémité de porteur, pour transférer le deuxième point d'extrémité de porteur à un quatrième point d'extrémité de porteur ;
le premier point d'extrémité de porteur envoyant un message d'accusé de réception de mise à jour au deuxième point d'extrémité de porteur, pour accuser réception du message de demande de mise à jour d'informations d'état, le message d'accusé de réception de mise à jour comprenant une indication du quatrième point d'extrémité de porteur ;
le deuxième point d'extrémité de porteur envoyant un message d'achèvement de demande de mise à jour au troisième point d'extrémité de porteur, le message d'achèvement de demande de mise à jour comprenant une indication du quatrième point d'extrémité de porteur ;
le deuxième point d'extrémité de porteur envoyant un message d'accusé de réception au premier point d'extrémité de porteur, le message d'accusé de réception indiquant que le deuxième point d'extrémité de porteur a envoyé le message d'achèvement de demande de mise à jour au troisième point d'extrémité de porteur ;
le premier point d'extrémité de porteur mettant à jour, en réponse au message d'accusé de réception, les informations d'état définissant l'association logique du premier point d'extrémité de porteur.

2. Procédé selon la revendication 1, dans lequel lesdites informations d'état définissant les premier et deuxième points d'extrémité de porteur comprennent une cartographie entre un nom logique pour le point d'extrémité et un localisateur, et
dans lequel ledit point d'extrémité logique pour le nom est une balise d'identité d'hôte utilisée dans le protocole d'identité d'hôte, HIP, et ledit localisateur est une adresse IP.

3. Procédé selon l'une des revendications précédentes, dans lequel ledit message d'accusé de réception de mise à jour envoyé par ledit premier point d'extrémité de porteur comprend une indication dudit quatrième point d'extrémité de porteur

4. Procédé selon l'une des revendications précédentes, comprenant en outre :
avant la transmission dudit autre message d'accusé de réception de mise à jour dudit deuxième point d'extrémité de porteur au dit premier point d'extrémité de porteur, l'envoi d'un message d'achèvement de demande de mise à jour dudit deuxième point d'extrémité de porteur au dit troisième point d'extrémité de porteur.

5. Procédé selon la revendication 4, dans lequel ledit message d'achèvement de demande de mise à jour comprend une indication dudit quatrième point d'extrémité de porteur.

6. Procédé selon l'une des revendications précédentes, comprenant en outre :
après l'envoi de ladite première demande de lancement de transfert de point d'extrémité de porteur dudit troisième point d'extrémité de porteur au dit deuxième point d'extrémité de porteur, l'envoi d'un message de demande de réponse de joignabilité dudit deuxième point d'extrémité de porteur au dit troisième point d'extrémité de porteur, et
l'envoi d'un message de réponse de joignabilité dudit troisième point d'extrémité de porteur au dit deuxième point d'extrémité de porteur.

7. Procédé selon l'une des revendications précédentes, comprenant en outre :
la détection de ladite deuxième demande de transfert de point d'extrémité de porteur par ledit premier point d'extrémité de porteur en recevant un message de demande de transfert de deuxième point d'extrémité de porteur ou un message de réponse de joignabilité envoyé dudit quatrième point d'extrémité de porteur au dit premier point d'extrémité de porteur.

8. Procédé selon l'une des revendications précédentes, comprenant en outre :
en réponse à ladite deuxième demande de transfert de point d'extrémité de porteur reçue par ledit premier point d'extrémité de porteur, l'envoi d'un message de demande de mise à jour d'informations d'état dudit premier point d'extrémité de porteur au dit deuxième point d'extrémité de porteur,
l'envoi d'un message d'accusé de réception de mise à jour dudit deuxième point d'extrémité de porteur au dit premier point d'extrémité de porteur, et
l'envoi d'un message au dit quatrième point d'extrémité de porteur qui comprend une indication dudit troisième point d'extrémité de porteur ;
l'exécution d'une mise à jour desdites informations d'état définissant l'association logique dudit deuxième point d'extrémité de porteur, tandis que
ladite mise à jour desdites informations d'état définissant l'association logique dudit deuxième point d'extrémité de porteur est retardée jusqu'à ce qu'un autre message d'accusé de réception de mise à jour soit reçu par ledit deuxième point d'extrémité de porteur dudit premier point d'extrémité de porteur, ledit autre message d'accusé de réception de mise à jour indiquant que des informations indiquant le troisième point d'extrémité de porteur ont été communiquées au dit quatrième point d'extrémité de porteur.

9. Procédé selon la revendication 8, dans lequel ledit message d'accusé de réception de mise à jour envoyé par ledit deuxième point d'extrémité de porteur comprend une indication dudit troisième point d'extrémité de porteur.

10. Procédé selon l'une des revendications 8 ou 9, comprenant en outre :
avant la transmission dudit autre message d'accusé de réception de mise à jour dudit premier point d'extrémité de porteur au dit deuxième point d'extrémité de porteur, l'envoi d'un message d'achèvement de demande de mise à jour dudit premier point d'extrémité de porteur au dit quatrième point d'extrémité de porteur.

11. Procédé selon l'une des revendications 8 à 10, dans lequel ledit message d'achèvement de demande de mise à jour comprend une indication dudit troisième point d'extrémité De porteur.

12. Procédé selon l'une des revendications précédentes, dans lequel les messages concernant le transfert de premier point d'extrémité de porteur par lequel ledit premier point d'extrémité de porteur est transféré au dit troisième point d'extrémité de porteur et les messages concernant le transfert de deuxième point d'extrémité de porteur par lequel ledit deuxième point d'extrémité de porteur est transféré au dit quatrième point d'extrémité de porteur sont envoyés d'une manière entrelacée.

13. Système pour transférer un point d'extrémité de porteur d'un porteur, un porteur comprenant un point d'extrémité de porteur et un point d'extrémité de porteur correspondant, le système comprenant :
un premier moyen de point d'extrémité de porteur,
un deuxième moyen de point d'extrémité de porteur,
un troisième moyen de point d'extrémité de porteur,
un quatrième moyen de point d'extrémité de porteur,
dans lequel chaque moyen de point d'extrémité de porteur est apte à fournir un point d'extrémité de porteur et à stocker des informations d'état définissant une association logique du point d'extrémité de porteur fourni avec un point d'extrémité de porteur correspondant, dans lequel
le troisième moyen de point d'extrémité de porteur est apte à envoyer un message de demande de lancement de transfert de premier point d'extrémité de porteur à un deuxième moyen de point d'extrémité de porteur, pour transférer un premier point d'extrémité de porteur fourni par le premier moyen de point d'extrémité de porteur à un troisième point d'extrémité de porteur fourni par le troisième moyen de point d'extrémité de porteur, le premier point d'extrémité de porteur correspondant à un deuxième point d'extrémité de porteur fourni par le deuxième moyen de point d'extrémité de porteur ;
le deuxième moyen de point d'extrémité de porteur est apte à envoyer, en réponse au message de demande de lancement de transfert de premier point d'extrémité de porteur, un message de demande de mise à jour d'informations d'état au premier moyen de point d'extrémité de porteur pour demander au premier moyen de point d'extrémité de porteur de mettre à jour les informations d'état définissant une association logique du premier point d'extrémité de porteur ;
le quatrième moyen de point d'extrémité de porteur est apte à envoyer un message de demande de lancement de transfert de deuxième point d'extrémité de porteur au premier moyen de point d'extrémité de porteur, pour transférer le deuxième point d'extrémité de porteur à un quatrième point d'extrémité de porteur fourni par le quatrième moyen de point d'extrémité de porteur ;
le premier point d'extrémité de porteur est apte à envoyer un message d'accusé de réception de mise à jour au deuxième moyen de point d'extrémité de porteur, pour accuser réception du message de demande de mise à jour d'informations d'état, le message d'accusé de réception de mise à jour comprenant une indication du quatrième point d'extrémité de porteur ;
le deuxième moyen de point d'extrémité de porteur est apte à envoyer, en réponse au message d'accusé de réception de mise à jour, un message d'achèvement de demande de mise à jour au troisième moyen de point d'extrémité de porteur, le message d'achèvement de demande de mise à jour comprenant une indication du quatrième point d'extrémité de porteur ;
le deuxième moyen de point d'extrémité de porteur est apte à envoyer un message d'accusé de réception au premier moyen de point d'extrémité de porteur, le message d'accusé de réception indiquant que le deuxième moyen de point d'extrémité de porteur a envoyé le message d'achèvement de demande de mise à jour au troisième moyen de point d'extrémité de porteur ;
le premier moyen de point d'extrémité de porteur est apte à mettre à jour, en réponse au message d'accusé de réception, les informations d'état définissant l'association logique du premier point d'extrémité de porteur.

14. Système selon la revendication 13, apte en outre à effectuer un procédé selon l'une des revendications 2 à 12.

15. Premier moyen de point d'extrémité de porteur apte à fournir un premier point d'extrémité de porteur et à stocker des informations d'état définissant une association logique du premier point d'extrémité de porteur avec un deuxième point d'extrémité de porteur correspondant fourni par un deuxième moyen de point d'extrémité de porteur, dans lequel le premier moyen de point d'extrémité de porteur est apte à :
recevoir un message de demande de mise à jour d'informations d'état du deuxième point d'extrémité de porteur pour demander au premier moyen de point d'extrémité de porteur de mettre à jour les informations d'état,
dans lequel le premier moyen de point d'extrémité de porteur est **caractérisé en ce qu'**il est apte à :
recevoir un message de demande de lancement de transfert de deuxième point d'extrémité de porteur d'un quatrième point d'extrémité de porteur fourni par un quatrième moyen de point d'extrémité de porteur, pour transférer le deuxième point d'extrémité de porteur au quatrième point d'extrémité de porteur,
envoyer un message d'accusé de réception de mise à jour au deuxième point d'extrémité de porteur, pour accuser réception du message de demande de mise à jour d'informations d'état, le message d'accusé de réception de mise à jour comprenant une indication du quatrième point d'extrémité de porteur,
recevoir un message d'accusé de réception du deuxième point d'extrémité de porteur, le message d'accusé de réception indiquant que le deuxième point d'extrémité de porteur a envoyé un message d'achèvement de demande de mise à jour à un troisième point d'extrémité de porteur fourni par un troisième moyen de point d'extrémité de porteur,
mettre à jour, en réponse au message d'accusé de réception, les informations d'état.

16. Deuxième moyen de point d'extrémité de porteur apte à fournir un deuxième point d'extrémité de porteur et à stocker des informations d'état définissant une association logique du deuxième point d'extrémité de porteur avec un premier point d'extrémité de porteur correspondant fourni par un premier moyen de point d'extrémité de porteur, dans lequel le deuxième moyen de point d'extrémité de porteur est apte à :
recevoir un message de demande de lancement de transfert de premier point d'extrémité de porteur d'un troisième point d'extrémité de porteur fourni par un troisième moyen de point d'extrémité de porteur, pour transférer le premier point d'extrémité de porteur au troisième point d'extrémité de porteur,
envoyer un message de demande de mise à jour d'informations d'état au premier point d'extrémité de porteur pour demander au premier point d'extrémité de porteur de mettre à jour les informations d'état définissant une association logique du premier point d'extrémité de porteur,
dans lequel le deuxième moyen de point d'extrémité de porteur est **caractérisé en ce qu'**il est apte à :
recevoir un message d'accusé de réception de mise à jour du premier point d'extrémité de porteur, pour accuser réception du message de demande de mise à jour d'informations d'état, le message d'accusé de réception de mise à jour comprenant une indication d'un quatrième point d'extrémité de porteur fourni par un quatrième moyen de point d'extrémité de porteur,
envoyer un message d'achèvement de demande de mise à jour au troisième point d'extrémité de porteur, le message d'achèvement de demande de mise à jour comprenant une indication du quatrième point d'extrémité de porteur,
envoyer un message d'accusé de réception au premier point d'extrémité de porteur, le message d'accusé de réception indiquant que le deuxième point d'extrémité de porteur a envoyé le message d'achèvement de demande de mise à jour au troisième point d'extrémité de porteur.

17. Programme informatique comprenant des instructions pour effectuer le procédé selon la revendication 1.
